Europäisches Patentamt

European Patent Office

Office européen des brevets

(11) Veröffentlichungsnummer : **0 052 770**
**B1**

(12) **EUROPÄISCHE PATENTSCHRIFT**

(45) Veröffentlichungstag der Patentschrift :
07.08.85

(51) Int. Cl.⁴ : **G 01 N 21/07, B 04 B  5/04**

(21) Anmeldenummer : **81108752.7**

(22) Anmeldetag : **22.10.81**

(54) Rotoreinheit mit Einsatzelementen für einen Zentrifugalanalysator.

(30) Priorität : **25.11.80 DE 3044372**

(43) Veröffentlichungstag der Anmeldung :
**02.06.82 Patentblatt 82/22**

(45) Bekanntmachung des Hinweises auf die Patenterteilung : **07.08.85 Patentblatt 85/32**

(84) Benannte Vertragsstaaten :
**AT BE CH DE FR GB IT LI LU NL SE**

(56) Entgegenhaltungen :
FR-A- 2 409 514
US-A- 3 707 354
US-A- 3 713 775
US-A- 4 135 883

(73) Patentinhaber : **Boehringer Mannheim GmbH
Sandhoferstrasse 116
D-6800 Mannheim 31 (DE)**

(72) Erfinder : **Edelmann, Hermann
Diemendorfer Strasse 21
D-8132 Tutzing-Unterzeismering (DE)**
Erfinder : **Pasch, Manfred
Anton-Bartl-Strasse 7
D-8132 Tutzing (DE)**
Erfinder : **Klose, Sigmar, Dr. phil
Breitenloh 7
D-8131 Berg-2 (DE)**
Erfinder : **Haar, Hans-Peter, Dr. rer. nat.
Trifthofstrasse 17
D-8120 Weilheim (DE)**
Erfinder : **Mann, Karlheinz
Herbststrasse 15
D-8120 Weilheim (DE)**

**Beschreibung**

Die vorliegende Erfindung betrifft einen Zentrifugalanalysator nach dem Obergriff des Anspruchs 1.

. Zentrifugalanalysatoren mit einer Rotoreinheit der eingangs beschriebenen Art sind seit einer Reihe von Jahren für Zwecke der chemischen Analyse, insbesondere in der klinischen Chemie, gebräuchlich.

Sie haben kreissymmetrisch aufgebaute Rotoreinheiten mit einer Mehrzahl von radial verlaufenden Analysekanälen. Jeder Analysekanal weist von innen nach außen üblicherweise einen muldenförmig ausgebildeten Reagenzraum, einen Probenraum und einen Meßraum auf, der bei den bekannten Einrichtungen als optische Küvette ausgebildet ist. Die Rotoreinheit läßt sich gliedern in eine Rotorbasis und einen auf der Rotorbasis drehfest gelagerten Rotorkopf. Die Rotorbasis ist üblicherweise als Platte oder Rahmen ausgebildet und mit der Achse der Rotorantriebs fest verbunden. Mit dem Begriff Rotorkopf wird der übrige Teil des Rotoreinheit bezeichnet, der insbesondere die erwähnten Analysekanäle einschließt. Bei neueren Zentrifugalanalysatoren ist der Rotorkopf als Einheit auswechselbar und wird im Betrieb drehfest mit der Rotorbasis verbunden. Rotorkopf und Rotorbasis können jeweils sehr verschieden ausgestaltet sein und sich insbesondere auch im Durchmesser ihrer äußeren Begrenzung wesentlich unterscheiden. So kann die Rotorbasis beispielsweise nur aus einer mit der Rotorantriebsachse einstückig verbundenen Halterung für den Rotorkopf bestehen, die von dem Rotorkopf im Betrieb vollständig überlagert wird.

Der Rotorkopf wird bei den bekannten Einrichtungen im Stand mit Reagenzien und Proben befüllt. Eine dazu verwendbare Einrichtung ist in der DE-B-2 626 810 beschrieben, welcher auch der Aufbau eines typischen Rotors zu entnehmen ist. Wie aus dieser Druckschrift zu entnehmen ist, ist zum automatischen Befüllen des Rotors eine komplizierte mechanische Einrichtung notwendig.

Nach dem Befüllen werden die bekannten Rotorköpfe in den Zentrifugalanalysator eingesetzt und mit der Rotorbasis verbunden. Der Rotor wird in schnelle Drehung versetzt, wobei bei manchen derartigen Einrichtungen wechselnde Drehzahlen zum Mischen verwendet werden. Durch die Zentrifugalbeschleunigung beim Rotieren des Rotors wird das Reagenz aus seiner Kammer in die Probenkammer und dann beide zusammen in die Meßkammer befördert. Dort wird dann bei laufendem Rotor gemessen. Diese Messung besteht bei den bekannten Einrichtungen aus einer Bestimmung der optischen Dichte der Flüssigkeit in den als optische Küvetten ausgebildeten Meßkammern. Dank moderner elektronischer Auswerteeinrichtungen kann bei jeder Rotorumdrehung die Absorption in jeder Küvette gemessen werden. Dadurch läßt sich die Absorption in sämtlichen Küvetten nahezu kontinuierlich beobachten. Bei einer typischen Rotationsgeschwindigkeit von 1 000 Umdrehungen pro Minute werden für jede Küvette je Minute 1 000 Messungen durchgeführt. Aufgrund dieses Verfahrens ergibt sich eine mit konventionellen Analysegeräten kaum bei vergleichbarer Analysenfrequenz zu erreichende Genauigkeit der Messung, insbesondere bei sogenannten kinetischen Analysebestimmungen, bei denen die Geschwindigkeit des Reaktionsverlaufs Aufschluß über die Konzentration eines bestimmten Bestandteils der Probe gibt.

Die bekannten Zentrifugalanalysatoren haben eine Reihe wesentlicher Vorteile, jedoch auch erhebliche Nachteile. Eine Zusammenfassung der wesentlichsten Anforderungen an ein optimales Analysegerät ist bereits einer der ersten Veröffentlichungen über Zentrifugalanalysatoren zu entnehmen, nämlich dem Artikel von Norman G. Anderson in « Analytical Biochemistry », Band 28, Seite 545-562 aus dem Jahre 1969. Eine dieser Anforderungen ist die praktisch gleichzeitige Messung mehrerer Reaktionen, die, wie oben beschrieben, eine bessere Verfolgung der einzelnen Reaktionsverläufe ermöglicht. Eine andere Forderung richtet sich darauf, daß die Volumina der Reagenzien und Proben möglichst klein sein sollen. Auch diese Forderung wird von den bekannten Zentrifugalanalysatoren weitgehend erfüllt, eine Verbesserung ist jedoch weiterhin wünschenswert. Zentrifugalanalysatoren erlauben auch ohne weiteres den Anschluß an moderne Datenverarbeitungssysteme zur Auswertung der Meßergebnisse, d. h. sowohl zur Umwandlung der Absorptionswerte in die gewünschten Konzentrationsangaben, als auch zur statistischen Auswertung dieser Konzentrationen, um dem Arzt möglichst weitgehend aufbereitete Angaben machen zu können.

Andere bereits in diesem frühen Artikel gestellte Anforderungen werden von den derzeit gebräuchlichen Zentrifugalanalysatoren nicht im wünschenswerten Ausmaß erfüllt. Die bekannten Geräte erfordern immer noch ein hohes Maß an Aufmerksamkeit vom Personal, sie sind nicht ausreichend einfach auch für ungeschultes Personal zu bedienen und sie sind noch nicht flexibel und variabel genug, um die sehr verschiedenen Anforderungen, insbesondere im Betrieb eines klinischen Labors, zu erfüllen.

Diese Mängel haben im Laufe der Jahre zu einer Vielzahl von Ausgestaltungen des ursprünglichen Konzepts Anlaß gegeben, die zu immer komplizierteren Rotorkonstruktionen führten. Diese Rotoren wurden damit teuer in der Herstellung und sind doch nicht in der Lage, alle verschiedenen Anforderungen der unterschiedlichen in der klinischen Chemie üblichen analytischen Bestimmungen optimal zu erfüllen.

Die meisten bekannten Rotoren sind insbesondere jeweils nur für die Durchführung einer analytischen Bestimmung für eine Vielzahl von Proben in einem Rotorlauf geeignet. In der Regel müssen im klinischen Labor aber von einer Probe, also beispielsweise vom Blut eines Patienten, eine Reihe verschiedener analytischer Bestimmungen durchgeführt werden, die man insgesamt auch als Profil bezeichnet. Dies bedingt bei den bekannten Analysatoren einen erheblichen organisatorischen Aufwand. Die einzelnen, zum Beispiel auf einer Anforderungskarte von Arzt dem klinischen Labor mitgeteilten notwendigen analytischen Bestimmungen müssen nämlich in getrennten Rotorläufen nach und nach auf einem oder mehreren Zentrifugalanalysatoren durchgeführt werden. Danach werden die getrennt bestimmten Daten zusammengefaßt und dem Arzt mitgeteilt. Dieses komplizierte Verfahren bedingt nicht nur einen großen organisatorischen Aufwand, sondern ist bedauerlicherweise auch immer wieder die Ursache von Übermittlungsfehlern, aud denen dann möglicherweise falsche therapeutische Maßnahmen des Arztes resultieren können. Es besteht also ein Bedarf nach Zentrifugalanalysatoren, die variabler und flexibler verschiedenen Aufgaben angepaßt werden können und sich insbesondere zu Profilanalysen oder wenigstens zu mehreren verschiedenen analytischen Bestimmungen in einem Rotorlauf eignen. Dies ist insbesondere auch für die Notfallanalytik wichtig, wo unter Umständen in kürzester Zeit mehrere verschiedene analytische Bestimmungen für eine Probe, d. h. für einen Patienten durchgeführt werden müssen. .

In der US-A-3 713 775 und in der US-A-4 135 883 sind zwei verschiedene Entwicklungsstadien eines Zentrifugalanalysators beschrieben, mit dem im Prinzip mehrere verschiedene analytische Bestimmungen von einer oder mehreren Proben möglich sind. Zu diesem Zweck trägt der Rotor des dort beschriebenen Geräts Küvetten, die in seitlich angeordneten Räumen Kunststoffbeutel enthalten, in denen sich je nach der auszuführenden analytischen Bestimmung verschiedene Reagenzien befinden können. Die Beutel haben eine Naht, die in definierter Weise aufreißen soll, wenn der die Küvetten tragende Rotor über eine bestimmte Drehzahl beschleunigt wird. Die Reagenzien sind im Fall des älteren Patents pulverförmig, bei dem eine Weiterentwicklung des gleichen Geräts betreffenden jüngeren Patent dagegen flüssig, offenbar um die mit dem definierten Aufreißen der Beutel verbundenen Probleme zu vermindern, was aber neue Probleme mit der Verdampfung der Reagenzien verursacht (US-A-4 135 883, Spalte 5, Zeile 25-38). Eine von der Meßkammer getrennte Probenkammer oder ein Fluidkanal ist nicht vorgesehen. Die Reagenzien sollen sich nach dem Aufreißen der Beutel unmittelbar in den Küvettenraum ergießen und dort mit der Probe mischen. Die speziellen Reagenzienbeutel müssen nach einem aufwendigen Verfahren mit Hilfe eines Lasers hergestellt werden. Dennoch wurde mit diesem Prinzip keine zuverlässige Funktion erreicht.

Ein weiteres nicht nur für Zentrifugalanalysatoren typisches Problem der klinischen Chemie besteht darin, daß bei den bekannten Geräten die Probengewinnung, d. h. insbesondere die Gewinnung von Serum oder Plasma aus dem Blut und die Probenvorbereitung, d. h. insbesondere die Verdünnung von Serum oder Plasma auf die für die Analyse notwendigen Konzentrationen, in getrennten Arbeitsschritten außerhalb des Analysegerätes erfolgen. Es leuchtet unmittelbar ein, daß dadurch zusätzliche manuelle Arbeitsschritte und insbesondere Umfüllvorgänge notwendig sind. Diese können wiederum zu Verwechslungen oder beispielsweise auch zu Verunreinigungen der Probe führen.

Aufgabe der vorliegenden Erfindung ist es, einen Zentrifugalanalysator der eingangs beschriebenen Art so auszugestalten, daß er unter Vermeidung der Nachteile bekannter Zentrifugalanalysatoren eine möglichst einfache Bedienung und eine möglichst flexible und vielseitige Nutzung des Gerätes bei einem hohen Maß an Zuverlässigkeit ermöglicht.

Zur Lösung dieser Aufgabe schlägt die Erfindung einen Zentrifugalanalysator der eingangs bezeichneten Art mit den Merkmalen des kennzeichnenden Teils des Anspruchs 1 vor.

Jedes Einsatzelement enthält Einrichtungen zur Durchführung von Teilschritten analytischer Bestimmungen. Die Einsatzelemente können in ihrer äußeren Form verschieden sein, sie können sich aber beispielsweise auch nur in der chemischen Zusammensetzung eines Teiles ihre Bestandteile unterscheiden. Wesentlich ist, daß durch den erfindungsgemäßen Vorschlag, statt der bisher üblichen einheitlich aufgebauten Rotoren solche zu verwenden, deren Rotorkopf eine Mehrzahl verschiedener Einsatzelemente aufnehmen kann, eine wesentlich erhöhte Variabilität erreicht wird. Während die bekannten Rotoren, wie oben beschrieben, nur für die Erfüllung jeweils einer bestimmten Aufgabe, nämlich in der Regel für die Bestimmung von jeweils einem chemischen Bestandteil der Probe an einer Vielzahl von Proben in einem Rotorlauf (sogenannter « Batch »-Betrieb) geeignet waren, kann bei der erfindungsgemäßen Rotoreinheit jedes Einsatzelement für eine bestimmte Aufgabe optimal angepaßt werden. Durch die Möglichkeit, eine Mehrzahl verschiedener Einsatzelemente mit der Rotorbasis zu verbinden, läßt sich für jeden Rotorlauf ein individuell angepaßter Rotor zusammenstellen, der dann in wesentlich vielfältigerer Art und Weise einsetzbar ist.

Zum Beispiel sind dadurch auf einfache Weise Bestimmungen mehrerer Bestandteile einer Probe (Profilbestimmungen) in einem Rotorlauf möglich. Außerdem ergeben sich erhebliche Handhabungsvereinfachungen, wie im folgenden noch dargestellt wird.

Als Einsatzelemente können Analyseelemente von verschiedener Bauweise verwendet werden. Dazu gehören Einfach-Analyseelemente, welche Einrichtungen zur Bestimmung jeweils eines Bestandteiles der Probe einschließen und ebenso Mehrfach-Analyseelemente, die Einrichtungen zur gleichzeitigen Bestimmung mehrerer Bestandteile von einer oder mehreren Proben aufweisen. Diese Einsatzelemente können nun ganz auf die jeweilige Analyseaufgabe abgestimmt sein. So können sie in ihrer Formgebung verschiedene Analysekanäle aufweisen, die mit flüssigen Reagenzien beschickt werden. Sie können aber auch schon Reagenzien vorgepackt, insbesondere in fester Form, enthalten, die dann, wie später erläutert wird, durch die verdünnte Probe gelöst und mit dieser gemischt werden. Der Begriff « Einsatzelemente » bzw. « Analyseelement » schließt jede Form und Größe ein.

Gemäß einer anderen bevorzugten Ausführungsform schließen die erfindungsgemäß mit der Rotorbasis verbindbaren Einsatzelemente Elemente zur Gewinnung und Vorbereitung der Proben ein. Auch durch diese Maßnahmen wird ein wesentlicher Nachteil bekannter Zentrifugalanalysatoren beseitigt. Bisher wurde nämlich die Probe jeweils unabhängig vom Analysegerät gewonnen und vorbereitet. Im Falle der Blutanalyse mußte das Blut zunächst zur Gewinung von Serum oder Plasma, z. B. zentrifugiert und dieses dann entsprechend verdünnt werden, bevor es den Probekammern eines Zentrifugalanalysators zugeführt werden konnte. Zum Übertragen der Proben in den Rotorkopf außerhalb des Gerätes wurden, wie weiter oben erwähnt, komplizierte Apparaturen benutzt oder es mußte von Hand pipettiert werden. Mit den erfindungsgemäßen und im folgenden näher beschriebenen Einsatzelementen zur Gewinnung und/oder Vorbereitung der Probe ist es nun möglich, diese wesentlichen Schritte in dem Zentrifugalanalysegerät durchzuführen, ohne daß manuelle Umfüllvorgänge oder andere manuelle Handhabungsschritte notwendig sind. Dadurch wird nicht nur die Bedienung vereinfacht, sondern durch das Ausschalten menschlicher Fehler wird auch die Zuverlässigkeit erhöht.

Bevorzugt ergänzen sich die Einsatzelemente in ihren räumlichen Abmessungen so, daß größere Elemente am Platz einer ganzzahligen Mehrzahl der kleinsten Elemente mit der Rotorbasis verbindbar sind. Man kann diesen erfindungsgemäßen Vorschlag auch so ausdrücken, daß die Abmessungen der Einsatzelemente ein Rastermaß einhalten. Ein bestimmter ganzzahliger Bruchteil der Rotorfläche bzw. des Rotorumfanges bestimmt die Grundeinheit des Rasters. Die einzelnen Einsatzelemente sind dann so gestaltet, daß ihr Platzbedarf einem Vielfachen dieser Rastergrundeinheit entspricht. Durch diese Maßnahme wird die erfindungsgemäße Rotoreinheit besonders variabel, weil nunmehr größere Einsatzelemente ohne Platzverschwendung den Platz mehrerer kleiner Einsatzelemente einnehmen können. Bevorzugt sind die Halterungen für die Einsatzelemente aus dem gleichen Grund auf der Rotorbasis, soweit sie jeweils auf dem gleichen Kreisumfang liegen, periodisch angeordnet, wobei die Periodizitätslänge der Halterungsanordnung der Grundeinheit des Rasters entspricht.

Es ist ausdrücklich darauf hinzuweisen, daß die Erfindung sich nicht auf den Fall beschränkt, daß die Einsatzelemente alle in etwa den gleichen radialen Abstand vom Zentrum des Rotors haben. Vielmehr kann es für bestimmte Einsatzzwecke durchaus sinnvoll sein, die Einsatzelemente auf verschiedenen Kreisumfängen des Rotors anzuordnen, etwa um somit verschiedene Zentrifugalbeschleunigungen bei gleicher Drehzahl auf die verschiedenen Elemente wirken zu lassen. In diesem Fall werden auch die Halterungen für die Einsatzelemente einen verschiedenen radialen Abstand vom Rotorzentrum aufweisen, also auf verschiedenen Kreisumfängen liegen.

Eine in Aufsicht auf den Rotor gesehen kreissektorförmige Gestaltung der Einsatzelemente ist besonders bevorzugt, weil sich dadurch verschiedene Einsatzelemente nahtlos aneinander anschließen und sich aus der Gesamtheit der Einsatzelemente eine ununterbrochene Oberfläche des Rotorkopfes ergibt, wenn der Rotor vollständig mit Einsatzelementen beladen wird, was jedoch nicht notwendig ist. Der Begriff « kreissektorförmig » soll hier so verstanden werden, daß die Begrenzungslinien der Sektoren, also in Aufsicht auf den Rotor die Begrenzungslinien der Einsatzelemente sich im wesentlichen entlang Radien des Rotorkreises erstrecken. Selbstverständlich schließt der erfinderische Vorschlag Lösungen ein, bei denen die Außenkanten von dem Verlauf dieser Radien in einer bestimmten, sich bei den verschiedenen Elementen wiederholenden Art und Weise abweichen, so daß die verschiedenen Einsatzelemente sich, obwohl sie keine geraden Seitenflächen haben, zu einer ununterbrochenen Belegung der Rotorbasis ergänzen. Eine derartige Gestaltung kann insbesondere vorteilhaft sein, um die Einsatzelemente durch formschlüssige Ausgestaltung ihrer Seitenflächen aneinander zu haltern.

Von konventionellen Zentrifugalanalysatorrotoren ist es bekannt, den Rotorkopf zweiteilig auszubilden, nämlich in einen Ring an der Peripherie des Rotorkopfes, der die Küvetten für die optische Messung beinhaltet und einen in Aufsicht kreisrund ausgebildeten Innenteil, der genau in den Küvettenring paßt und an seiner Peripherie Durchtrittsöffnungen aufweist, die im zusammengebauten Zustand mit den Eintrittsöffnungen der Küvetten fluchten und dichtend abschließen. Die Analyseflüssigkeit tritt dann beim Rotieren des Rotors aus den Analysekanälen in dem kreisrunden Innenteil in die Küvetten des Küvettenringes über. Eine derartige Konstruktion hat den Vorteil, daß der Küvettenring aus hochwertigen Materialien und sehr sorgfältig hergestellt werden kann, so daß die Küvetten sehr gute optische Eigenschaften haben, während das kreisrunde Innenteil verhältnismäßig einfach, ausgeführt sein kann. Entsprechend ist auch die Erfindung in bevorzugter Ausführungsform ausgestaltet. Der Küvettenring ist in diesem Fall als Teil des Rotorkopfes anzusehen und mit der Rotorbasis fest oder auswechselbar verbunden.

Bevorzugt liegen alle Meßkammern auf einen Kreisumfang des Rotorkopfes, d. h. sie haben den gleichen radialen Abstand von dessen Zentrum, damit eine einzige Auswerteeinheit zur Bestimmung der charakteristischen Parameter ausreicht, die zum Nachweis von Bestandteilen der Probe gemessen werden müssen. Wie erwähnt, wird bei den bekannten Zentrifugalanalysatoren und bevorzugt auch bei den erfindungsgemäßen Einrichtung als für den Nachweis von Bestandteilen der Probe charakteristischer Parameter die optische Absorption bei einer oder mehreren Wellenlängen bestimmt. Die Erfindung ist jedoch nicht auf derartige optische Messungen beschränkt. Gerade durch die neuartige Variabilität der erfindungsgemäßen Einrichtung kann es möglich werden, auch gänzlich andere Bestimmungen in einem Zentrifugalanalysator durchzuführen. Dazu gehören beispielsweise elektrische Messungen im Zusammenhang mit elektrochemischen Analyseverfahren verschiedenster Art. In diesem Fall weisen die Meßkammern Elektroden auf, deren Signale in geeigneter Weise, etwa über Schleifkontakte oder drahtlos, der Auswerteeinrichtung des Gerätes zugeführt werden. In solchen Fällen, aber auch bei rein optischen Messungen, können die Meßkammern durchaus auch auf verschiedenen Kreisumfängen des Rotorkopfes liegen.

Die Probengewinnungs- und/oder Probenvorbereitungselemente haben Entnahmestellen, an denen durch geeignete Einrichtungen des Gerätes, beispielsweise Kanülen automatischer Dosiereinrichtungen, sogenannter Dispensoren oder Dilutoren, Probe entnommen werden kann. Bevorzugt liegen diese Entnahmestellen auf einem Kreis mit dem gleichen Radius wie die Zufuröffnungen der Probekammern der Analyseelemente. Dadurch ist es möglich, für die Überführung der Proben von den Probengewinnungs- bzw. Probenvorbereitungselementen zu den Analyseelementen Dosiereinrichtungen zu verwenden, die sich nur in vertikaler Richtung bewegen. Der Rotor wird durch eine in den Antrieb integrierte Schrittschalteinrichtung dann jeweils in die für einen Entnahme- oder Zufuhrvorgang geeignete Position gebracht.

Gemäß weiterer bevorzugter Ausführungsformen tragen die Einsatzelemente Codierungen bezüglich der Probe und/oder der mit dem jeweiligen Element zu bestimmenden Bestandteile der Probe. Diese Codierungen sind durch eine in dem Zentrifugalanalysator eingebaute Leseeinrichtung lesbar, um dem Gerät auf diese Weise wesentliche Daten für die Auswertung mitzuteilen und gleichzeitig eine Kontrolle für die richtige Beschickung des Rotors mit Einsatzelementen durch das Bedienungspersonal zu erhalten. Weiterhin weisen die Einsatzelemente bevorzugt Marken zur Triggerung des Meßvorganges auf. Die Einsatzelemente weisen in ihrer Lage bezüglich der Rotorbasis naturgemäß gewisse, wenn auch bei sorgfältiger Ausführung der Halterung geringe Toleranzen auf. Da der Meßvorgang im allgemeinen mit Bezug auf die Position des Einsatzelementes getriggert werden muß, ist es besonders vorteilhaft, wenn sich die diesbezüglichen Marken am Einsatzelement und nicht etwa an der Rotorbasis befinden.

Die Halterungsteile, die durch formschlüssiges Zusammenwirken mit den Einsatzelementen zu deren präziser Halterung auf der Rotorbasis bevorzugt verwendet werden, sind bevorzugt in der Nachbarschaft der Meßzellen angeordnet.

Dadurch wirken sich eventuelle Toleranzen in den Abmessungen der Einsatzelemente bezüglich der Positionierung der Meßzellen besonders wenig aus.

Es werden auch Einsatzelemente mit einer erfindungsgemäßen Rotoreinheit verwendet, welche diesem Verwendungszweck besonders angepaßt sind und weitere bevorzugte Ausführungsformen der erfindungsgemäßen Rotoreinheit ermöglichen.

Bevorzugte derartige Einsatzelemente schließen die Reagenzien zur Durchführung von analytischen Bestimmungen in lagerfähiger und mit dem Einsatzelement transportierbarer Form ein. Derartige Analyseeinsatzelemente sind insbesondere vorteilhaft als Einmal-Elemente zu verwenden, die man auch als « Disposables » bezeichnet. Sie werden vom Hersteller bereits mit geeigneten Reagenzien für bestimmte Analysen beschickt und als Einheit mit den Reagenzien an den Verwender geliefert. Diesem wird dadurch die Handhabung einzelner, insbesondere flüssiger Reagenzien, abgenommen, was eine erhebliche Vereinfachung bedeutet. Derartige Disposables können in einer Vielzahl von Versionen hergestellt werden, wobei jede Version für eine oder mehrere gleiche oder verschiedene Analysenmethoden geeignet ist und die entsprechenden Reagenzien, aber auch entsprechend ausgeformte Fluidkanäle und sonstige Einrichtungen einschließt. Zur Durchführung einer Vielzahl verschiedener analytischer Bestimmungen muß der Benutzer dann nur noch die geeigneten Einsatzelemente auswählen und in die erfindungsgemäße Rotoreinheit einsetzen.

Ein besonders bevorzugtes Einsatzelement zur Verwendung in der erfindungsgemäßen Rotoreinheit enthält wenigstens ein Analysenreagenz in getrockneter Form und eine Vielzahl sehr kleiner miteinander in Verbindung stehender Hohlräume, welche die Probenkammer und die Meßkammer miteinander verbinden.

Andere bevorzugte Einsatzelemente, nämlich Probengewinnungs- und/oder -vorbereitungselemente sind dadurch gekennzeichnet, daß sie zur Abnahme von Blut von einem Patienten, zur Gewinnung von Serum oder Plasma unter Einwirkung der Zentrifugalbeschleunigung und als Probengefäß geeignet sind. Diese für Blutanalysen gedachten Elemente ersparen zwei zusätzliche Gefäße, nämlich eine Spritze zur Entnahme des Blutes aus dem Blutgefäß des Patienten und ein Zentrifugationsröhrchen zum Gewinnen von Plasma bzw. Serum. Gleichzeitig werden Umfüllvorgänge von einem Gefäß ins andere vermieden.

Im Zusammenhang mit der vorliegenden Erfindung besonders wichtig ist aber, daß die Gewinnung und Vorbereitung der Probe, wie bereits weiter oben erwähnt, bei Verwendung solcher Einsatzelemente im Analysengerät selbst geschehen kann und daß die Probe dann ohne manuelle Schritte aus dem Probengewinnungs- und/oder -vorbereitungsgefäß im Analysengerät selbst in einfacher Weise in die Analyseelemente überführt wird.

Auch für die Thermostatisierung der Probe ist es vorteilhaft, wenn diese Probengewinnungs- und/oder -vorbereitungselemente in der erfindungsgemäßen Rotoreinheit zum Einsatz kommen. Die Thermostatisierung kann nämlich durch eine geeignete geregelte Beheizung der Rotorbasis und/oder eines nicht mit den Einsatzelementen auswechselbaren Teils des Rotorkopfes, sei es durch eine thermostatisierte Flüssigkeitsströmung oder durch unmittelbare elektrische Beheizung und Kühlung, sichergestellt werden. Um eine hinreichend genaue Thermostatisierung der Probe zu erreichen, muß diese für eine gewisse Mindestzeit im thermischen Kontakt zu den thermostatisierten Teilen stehen. Würde die Probengewinnung und Probenaufbereitung außerhalb des Rotors stattfinden, so müßte nach Einbringen der Probe in den mit der Rotorbasis verbundenen Rotorkopf gewartet werden, bis diese zur Thermostatisierung notwendige Zeit verstrichen ist. Demgegenüber wird die Probe bei der erfindungsgemäßen Einrichtung schon während des Zentrifugierens und eventueller weiterer Vorbereitungsschritte, beispielsweise während des Verdünnens der Probe, thermostatisiert. Der Analysegang kann deshalb schon kurz nach Überführen der Probe in das Analyseeinsatzelement beginnen. Die daraus resultierende Zeitersparnis führt zu einer höheren Analyseleistung des Gerätes, beziehungsweise zu einer verbesserten Genauigkeit durch verbesserte Thermostatisierung.

Die erfindungsgemäße Rotoreinheit ist bevorzugt in einem besonders ausgestalteten Zentrifugalanalysator zu verwenden, der sich insbesondere dadurch auszeichnet, daß er Auswerteeinrichtungen zur Bestimmung mehrerer verschiedener Bestandteile der Probe in einem Rotorlauf einschließt. Wie weiter oben erwähnt, ermöglicht die Erfindung auf einfache Weise die Bestimmung mehrerer verschiedener Bestandteile oder Komponenten einer physiologischen Flüssigkeit in einem Rotorlauf. Die Bestimmung besteht aus einer chemischen Reaktion und der anschließenden Messung eines Parameters, dessen Wert für die Konzentration des zu bestimmenden Bestandteiles charakteristisch ist. Es gibt nun eine Vielzahl von für verschiedene Bestandteile einer Probe, insbesondere in der klinischen Chemie, bekannter und bewährter spezifischer chemischer Reaktionen, die zu einer Änderung des gleichen für die Konzentration charakteristischen Parameters, etwa der optischen Absorption der Lösung bei einer bestimmten Wellenlänge, führen. Ein Beispiel sind die zahlreichen Reaktionen, die zu einer Änderung des Konzentrationsverhältnisses von NAD und NADH führen, wodurch wieder die Absorption der Lösung bei 340 nm charakteristisch beeinflußt wird. Derartige Bestimmungen, die in der Änderung nur eines charakteristischen Parameters resultieren, lassen sich mit konventionellen Zentrifugalanalysatoren auswerten. Um die erfindungsgemäße Vielseitigkeit des neuartigen Analysegerätes voll ausnutzen zu können, ist es jedoch vorteilhaft, wenn der zur Anwendung kommende Zentrifugalanalysator mehrere Parameter in einem Rotorlauf auswerten kann. Diese können auch prinzipiell verschiedener Natur sein, beispielsweise Messung der optischen Absorption und der Fluoreszenz und unter Umständen elektrischer Werte. Besonders bevorzugt ist jedoch ein Zentrifugalanalysator, der zur Bestimmung der optischen Absorption bei mehreren verschiedenen Wellenlängen in einem Rotorlauf geeignet ist. Er weist zu diesem Zweck ein polychromatisches Photometer auf. Der Begriff « polychromatisch » ist hier nicht so zu verstehen, daß das Photometer mit einem mehrfarbigen Licht arbeitet. Vielmehr muß es sich um ein Photometer handeln, das bei einer Mehrzahl von verschiedenen Wellenlängen messen kann, wobei der Wechsel der Wellenlängen mit dem Durchlauf des Meßküvetten des Rotors so koordiniert ist, daß die Absorption jeder Küvette bei jeder gewünschten Wellenlänge meßbar ist.

Ein zur Verwendung mit der Erfindung angepaßter Zentrifugalanalysator weist weiterhin bevorzugt einen Rotorantrieb auf, der nicht nur, wie bei den bekannten Geräten, zum Antrieb des Rotors bei einer für den Misch- und Meßvorgang geeigneten Drehzahl (üblicherweise etwa 1 000 Umdrehungen pro Minute) geeignet ist, sondern darüber hinaus eine höhere Drehzahl zum Zentrifugieren von Proben hat. Außerdem soll der Antrieb geeignet sein, den Rotor schrittweise in bestimmte Positionen zu bewegen, was insbesondere für die Probenaufbereitung und -verteilung von Vorteil ist.

Die Erfindung wird im folgenden anhand von in den Figuren dargestellten Ausführungsbeispielen näher erläutert. Es zeigen :

Figur 1 eine perspektivische schematische Darstellung einer erfindungsgemäßen Rotoreinheit,

Figur 2 einen Querschnitt durch eine Rotoreinheit gemäß Fig. 1,

Figur 3 eine Aufsicht auf eine erfindungsgemäße Rotoreinheit, aus der insbesondere die Rastereinteilung deutlich wird,

Figur 4 eine schematische Darstellung in Aufsicht eines kombinierten Probengewinnungs- und -aufbereitungselementes,

Figur 5 einen Querschnitt durch ein Analyseeinsatzelement zur Verwendung mit flüssigen Reagenzien,

Figur 6 eine schematische Darstellung in Aufsicht einer bevorzugten Gestaltung eines Analysekanals und

Figuren 7a und 7b Querschnittsdarstellungen durch einen Teil eines in einem erfindungsgemäßen Analyseelement befindlichen Analysekanals mit zusätzlichen Mischeinrichtungen.

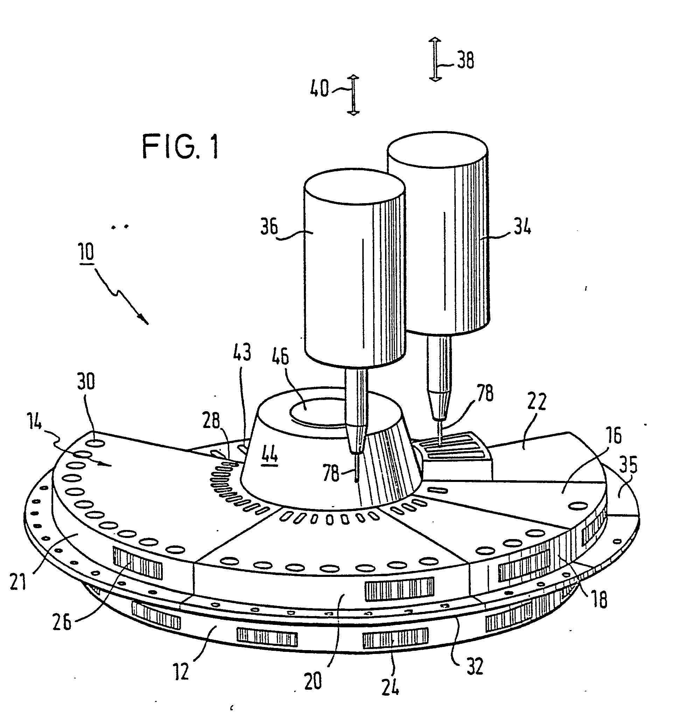

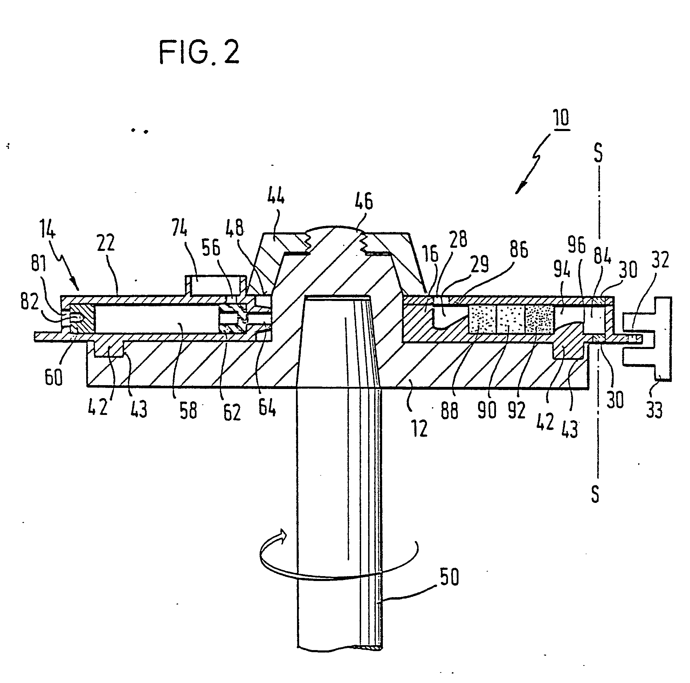

In den Fig. 1 und 2 erkennt man die in ihrer Gesamtheit mit dem Bezugszeichen 10 versehene Rotoreinheit mit einer Rotorbasis 12 und einem Rotorkopf 14. Der Begriff « Rotorkopf » schließt alle mit der Rotorbasis zum Betrieb des Zentrifugalanalysators verbindbaren Bauteile ein. Insbesondere umfaßt er die für die eigentliche Analyse notwendigen Bauelemente.

Hierzu gehören erfindungsgemäß zunächst verschiedene Analyseeinsatzelemente, beispielsweise Einfach-Analyseelement 16 und Mehrfach-Analyseelemente, wie die dargestellten Dreifach-Analyseelement 18, Siebenfach-Analyseelemente 20 und Elffach-Analyseelemente 21.

Weiterhin erkennt man ein kombiniertes Probengewinnungs- und -vorbereitungselement 22. Sowohl an der Rotorbasis 12 als auch an den Einsatzelementen 16, 18, 20, 21 und 22 befinden sich maschinenlesbare Codierung 24 bzw. 26. Die Analyseelemente haben Zufuhröffnungen 28 zur Zufuhr der Probe in die Probenkammern 29, Küvettenfenster 30 und Bohrungen 32, die als Triggermarken für die Auslösung des Meßvorganges dienen. In Fig. 2 ist schematisch ein Triggersignalgeber 33 eingezeichnet, der eine Lichtquelle und einen optischen Empfänger enthält, um jedesmal beim Passieren einer Triggerbohrung ein Triggersignal zu erzeugen. Der Strahlengang für die optische Absorptionsmessung verläuft entlang der Linie S-S in Fig. 2 und ist der Übersichtlichkeit halber nicht im einzelnen dargestellt. Er ist konventionell gestaltet, wobei jedoch bevorzugt ein polychromatisches Photometer zur Anwendung kommt.

Bei der in den Figuren dargestellten Ausführungsform der Erfindung wird eine optische Absorptionsmessung als für den Nachweis von Bestandteilen der Probe charakteristischer Parameter verwendet. Dies entspricht dem gebräuchlichsten Analyseverfahren in der klinischen Chemie, jedoch läßt sich die Erfindung auch auf andere Analyseprinzipien verwenden, bei denen als charakteristische Parameter beispielsweise die Fluoreszenz, die Lumineszenz, die Reflexion, die Radioaktivität oder elektrische Daten des Reagenzgemisches in der Meßkammer gemessen werden um daraus die Konzentration bestimmter Bestandteile der Probe, beispielsweise von Enzymen oder Substraten einer physiologischen Flüssigkeit, zu bestimmen.

In Fig. 1 erkennt man zwei Dosiereinrichtungen 34 und 36, die der Dosierung, Verdünnung und Verteilung der Proben dienen. Bevorzugt kommen ein Proben-Reagenz-Dosierer 34, der allgemein auch als Dilutor bezeichnet wird und ein Probenverteiler 36, der allgemein als Dispensor bezeichnet wird, zur Anwendung. Beide sind vertikal beweglich in dem erfindungsgemäßen Zentrifugalanalysator angeordnet, wie dies durch die Doppelpfeile 38 und 40 angedeutet ist.

Die Einsatzelemente 16, 18, 20, 21 und 22 sind durch Haltezapfen 42 mit der Rotorbasis 12 verbindbar, die entsprechende Haltenuten 43 aufweist (Fig. 2). Die Haltenuten 43 und die Haltezapfen 42 sind in ihrer Formgebung so aufeinander abgestimmt, daß sie formschlüssig zusammenwirken und eine positionsstabile Anordnung der Einsatzelemente 16, 18, 20, 21 und 22 sicherstellen. Zur Befestigung der Einsatzelemente ist weiter ein Zentralverschluß 44 vorgesehen, der mit einem Gewinde 46 auf die Rotorbasis 12 aufschraubbar ist und der auf Auflageflächen 48 der Einsatzelemente 16, 18, 20, 21 und 22 aufliegt. Die Rotorbasis 12 ist über eine Antriebsachse 50 mit dem Rotorantrieb des Zentrifugalanalysators verbunden. Die Qualität der Lagerung der Antriebsachse und das Gewicht der Rotorbasis sind wesentlich für einen vibrationsarmen Lauf des Rotors. Darüberhinaus sind die Einsatzelemente in ihrer Gewichtsverteilung bevorzugt so gestaltet, daß auch bei verschiedener Beladung des Rotors keine zu große Unwucht entsteht. Soweit der Rotor nicht vollständig beladen wird, kann es notwendig sein, entsprechende Gewichte auf der Rotorbasis anzubringen, um eine zu große Unwucht zu vermeiden.

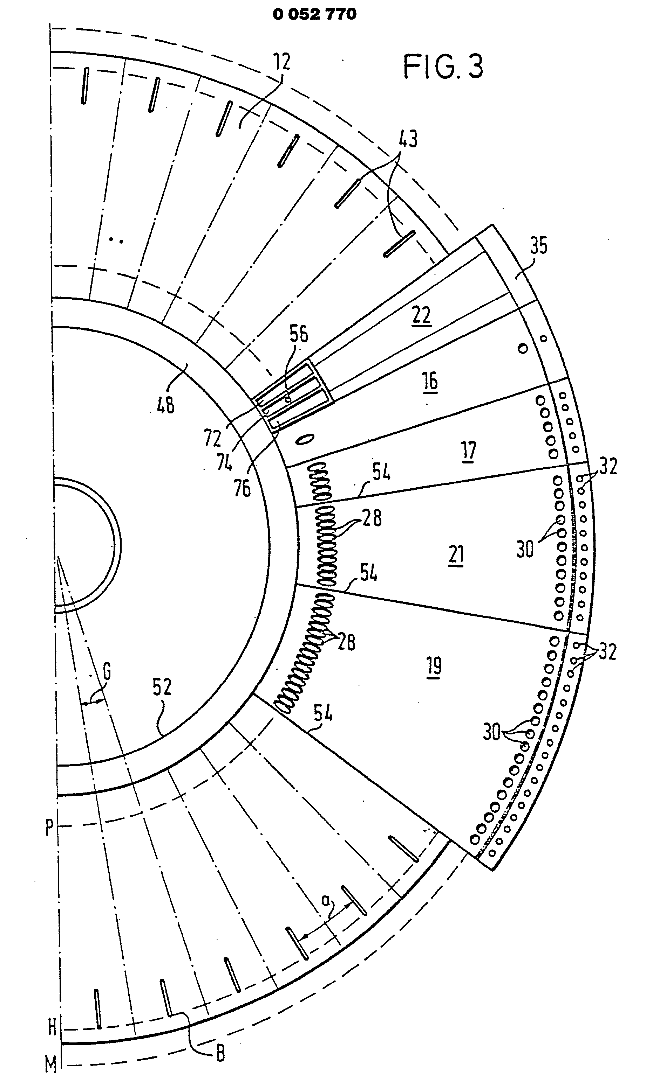

Fig. 3 zeigt eine Aufsicht auf einen erfindungsgemäßen Zentrifugalanalysator, der sich von dem in Fig. 1 und 2 dargestellten in so weit unterscheidet, als er Platz für eine größere Anzahl von Einsatzelementen bietet. Diese Figur soll insbesondere die vorteilhafte erfindungsgemäße Rasterung der Befestigung und damit der Anordnung der wahlweise auswechselbaren Einsatzelemente 16, 17, 19, 21 und 22 verdeutlichen. Man erkennt, daß die Kreisfläche der Rotorbasis 12 in eine Mehrzahl gleichgroßer ganzzahliger Bruchteile B aufgeteilt ist. In der dargestellten Ausführungsform sind diese Bruchteile Sektoren des Kreises, die an einem der inneren Begrenzung 52 der Auflagefläche 48 entsprechenden Radius abgeschnitten sind. Jeder Sektor entspricht einem bestimmten Winkelmaß des Kreises, das als Grundeinheit des Rasters der Einsatzelementanordnung bezeichnet wird und in der Figur das Bezugszeichen G trägt.

Wie aus der Figur ersichtlich ist, sind bei der bevorzugten Ausführungsform alle Haltenuten 43 für die Einsatzelemente auf dem gleichen Kreisumfang H angeordnet. Die Anordnung ist periodisch mit der Periodizitätslänge a.

Erfindungswesentlich ist nun, daß die Periodizitätslänge a der Grundeinheit G des Rasters entspricht. Dadurch wird es möglich, verschieden große Einsatzelemente, z. B. die Elemente 17, 19 und 21 wahlweise und ohne Platzverschwendung an verschiedenen Stellen der Rotorbasis mit dieser zu verbinden.

Im Unterschied zu Fig. 1 sind in Fig. 3 Analyseelemente mit fünf, elf und siebzehn Analysekanälen eingezeichnet, die mit den Bezugszeichen 17, 21 und 19 versehen sind. Das dargestellte Elffach-Analyseelement 21 entspricht in seiner Größe zwei Grundeinheiten des Rasters G und weist zwei Haltezapfen 42 an seiner Unterseite auf. Das Siebzehnfach-Analyseelement 19 hat eine drei Rastergrundeinheiten G entsprechende Größe und drei Haltezapfen 42. Man erkennt leicht, daß durch diese erfindungsgemäße Konstruktion eine besonders vorteilhafte Anordnung verschiedener Einsatzelemente auf der Rotorbasis möglich ist.

Die dargestellte Ausführungsform ist in so weit besonders einfach, daß die Einsatzelemente pro Rastereinheit ihrer Größe jeweils nur eine Halterung haben und als einfache Sektoren mit geraden Seitenkanten ausgebildet sind. Die Erfindung schließt jedoch eine Vielzahl komplizierterer Gestaltungen der Einsatzelemente ein. So können mehrere Halterungen pro Rastergrundeinheit eine verbesserte Positionierung der Elemente bewirken. Eine von der Geraden abweichende Gestaltung der Seitenkanten 54 kann ebenfalls den Eingriff von Element zu Element und damit die Genauigkeit von deren Anordnung auf der Rotorbasis 12 verbessern. Auch Einsatzelemente, die sich gegenseitig nicht berühren und mit Abstand auf der Rotorbasis befestigt sind, können für bestimmte Anwendungsfälle Vorteile haben. Die Einsatzelemente müssen auch nicht alle mit gleichem radialen Abstand zum Zentrum des Rotors angeordnet sein. In diesem Fall befinden sich nicht alle Halterungen auf dem gleichen Kreisumfang, jedoch ist es auch in diesem Fall vorteilhaft, wenn die Periodizitätslänge der etwa auf dem gleichen Kreisumfang befindlichen Halterungen der Grundeinheit des jeweils zugeordneten Einsatzelementrasters entspricht. In allen Fällen ist wesentlich, daß die räumlichen Abmessungen der Einsatzelemente und deren Anordnung so aufeinander abgestimmt sind, daß größere Elemente am Platz einer ganzzahligen Mehrzahl der kleinsten Elemente untergebracht werden können. Dabei läßt sich die erfindungsgemäße Rasterung in einer Vielzahl von Variationen verwenden.

Wie man weiterhin aus der Zahl der Zufuhröffnungen 28 und Meßkammern 84 der Analyseelemente in Fig. 3 ersieht, haben die Mehrfach-Analyseelemente 17, 19 und 21 jeweils eine Anzahl von Analysekanälen, die ein um eins vermindertes Vielfaches von sechs ist. Verallgemeinert kann man sagen, daß Mehrfach-Analyseelemente der erfindungsgemäßen Art bevorzugt eine Anzahl von Analysekanälen aufweisen, die dem um eins verminderten ganzzahligen Vielfachen einer Grundanzahl entspricht. Die Grundanzahl ist die maximale Zahl der Analysekanäle des kleinsten Mehrfach-Analyseelementes. Die beschriebene bevorzugte Anzahl von Analysekanälen der Mehrfach-Analyseelementen ergibt bei der oben beschriebenen Rastereinteilung eine optimale Ausnutzung der Elemente, wobei berücksichtigt ist, daß die Seitenkanten der Einsatzelemente einen gewissen Platzbedarf haben, der jeweils etwa dem Platzbedarf eines Analysekanals entspricht.

Sämtliche Küvettenfenster 30 befinden sich auf einem gemeinsamen Meßkreis, der gestrichelt dargestellt und mit dem Bezugszeichen M versehen ist. Dadurch genügt ein einziges Photometer zur Ermittlung sämtlicher Meßergebnisse. Erfindungsgemäß befinden sich weiterhin die Zufuhröffnungen 28 der Probenkammern 29 in den Analyseelement auf dem gleichen Kreisumfang wie die Entnahmeöffnung 56 des kombinierten Probengewinnungs- und -vorbereitungselements 22. Dieser Probenkreis P ist ebenfalls gestrichelt dargestellt.

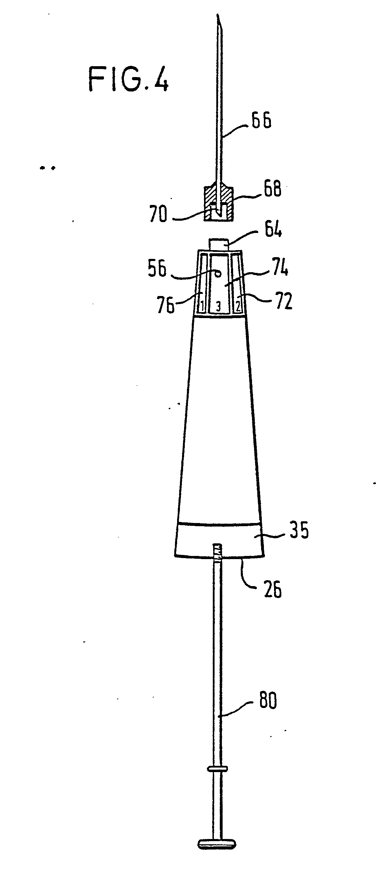

In Fig. 2 ist auf der linken Seite das kombinierte Probengewinnungs- und -vorbereitungselement 22 im Querschnitt zu erkennen. In Fig. 4 ist es mit den zugehörigen Zubehörteilen nochmals in Aufsicht dargestellt. Es hat einen bevorzugt zylinderförmigen Innenraum 58, wobei der kreisförmige Querschnitt des Zylinders in einer auf die Papierebene von Fig. 2 senkrechten Ebene liegt. Am in Fig. 2 linken und in Fig. 4 unteren Ende des Einsatzelementes 22 befindet sich in dem Innenraum 58 ein Kolben 60. An dem dem Kolben gegenüberliegenden Ende ist der Innenraum 58 durch einen elastischen und im Querschnitt nach Fig. 2 U-förmigen Stopfen 62 aus gummielastischem Material verschlossen. An dem gleichen Ende befindet sich ein Anschlußteil 64 für eine Spritzennadel 66, die über ein mit dem Anschlußteil 64 zusammenwirkendes Verbindungsstück 68 mit dem Einsatzelement verbunden werden kann. Dabei dringt das hintere angespitzte Ende 70 der Spritzennadel 66 in den Verschlußstopfen 62 des Einsatzelementes ein, wodurch eine nach außen abgedichtete Fluidverbindung zwischen dem Hohlraum der Nadel 66 und dem Innenraum 58 des Einsatzelementes 22 hergestellt wird.

Im Einbaulage nach oben befindet sich im Bereich des Verschlußstopfens 62 die Entnahmeöffnung 56 des kombinierten Probengewinnungs- und -vorbereitungselementes 22. Sie öffnet sich in die mittlere von drei Verdünnungskammern 72, 74 und 76 (Fig. 3 und Fig. 4). Ähnlich wie bei dem Anschließen der Spritzennadel 66 wird die Entnahmeöffnung 56 durch eine nadelartige Kanüle 78 des entsprechenden Dilutors durchstoßen und verschließt sich wieder, wenn die Kanüle 78 des Dilutors 34 herausgezogen wird.

Am radial äußeren Ende des Einsatzelementes 22 ist eine Kolbenstange 80 anschließbar, die, eine Bohrung 81 durchdringend, in eine Ausnehmung 82 des Kolbens 60 eingreift und kraftschlüssig mit diesem verbindbar ist.

Das erfindungsgemäße kombinierte Probengewinnungs- und -vorbereitungselement 22 wird wie folgt benutzt :

Zunächst wird es an den vorgesehenen Stellen mit der Spritzennadel 66 und der Kolbenstange 80 versehen und der Kolben 60 in die radial innenliegende (in Fig. 2 rechte) Position gebracht. Dann kann die Nadel in das Blutgefäß eines Patienten eingestochen werden, um in konventioneller Weise, wie mit einer Spritze, durch Zurückziehen des Kolbens 60 Blut zu entnehmen. Der Kolben wird ganz zurückgezogen, die Kolbenstange 80 und die Spritzennadel 66 abgenommen und das Einsatzelement 22 in den Analysator eingesetzt. Nachdem die erfindungsgemäße Rotoreinheit 10 in dem für eine bestimmte Messung notwendigen Maß bestückt ist, wird ein Zentrifugationslauf durchgeführt, wie weiter unten noch eingehender beschrieben wird. Dabei sammeln sich am radial äußeren Ende des Einsatzelementes 22 die festen Bestandteile des Blutes an, während radial mehr nach innen der Innenraum 58 mit Serum bzw. (falls ein entsprechendes Gerinnungsmittel zugesetzt wurde) mit Plasma gefüllt ist. Die weiteren Analyseschritte werden weiter unten im Zusammenhang mit der Beschreibung der Gesamtfunktion des erfindungsgemäßen Gerätes näher dargelegt.

Einzelheiten zum Aufbau der Analyseelemente sind insbesondere den Fig. 2, 5, 6 und 7 zu entnehmen. In Fig. 2 erkennt man im Querschnitt den Analysekanal eines besonders bevorzugten Analyseelementes. Dieses ist in der Figur mit dem Bezugszeichen 16 eines Einfach-Analyseelementes versehen. Es soll jedoch betont werden, daß die hier beschriebene Gestaltung eines Analysekanals ebenso wie eine Vielzahl anderer dem jeweiligen Analysezweck angepaßter Gestaltungen wahlweise auch in einem Mehrfach-Analyseelement, z. B. den Elementen 18, 20 und 21 verwendet werden kann. Es ist für die durch die vorliegende Erfindung erreichte Variabilität gerade wesentlich, daß verschiedene Analyseeinsatzelemente verschieden aufgebaut sind, wobei sowohl die chemische Bestückung als auch der physische Aufbau der Analysekanäle von Element zu Element, bei den Mehrfach-Analyseelementen jedoch auch innerhalb eines Elementes je nach dem Zweck des Elementes, also je nach den mit dem Element durchzuführenden analytischen Bestimmungen, verschieden sein können.

Das in der Fig. 2 im Querschnitt dargestellte Analyseelement hat eine Probenkammer 29, eine Meßkammer 84 und einen beide verbindenden Fluidkanal 86, der im vorliegenden Fall einen in der Zeichenebene von Fig. 2 im wesentlichen rechteckigen Querschnitt hat und in der Dimension senkrecht zu dieser Zeichenebene nur eine vergleichsweise geringe lichte Weite aufweist. In einem praktischen Anwendungsfall ist die Höhe des Fluidkanals 86 6 mm, die Breite 1 mm. Das Fassungsvermögen des Probenraumes 29 liegt bei dieser Ausführungsform bei ca. 20 µl. In dem Fluidkanal 86 befinden sich Vliespapiere 88, 90 und 92, die mit für die jeweilige Analyse geeigneten getrockneten Reagenzien beschickt sind. Sie weisen eine Vielzahl kleiner miteinander in Verbindung stehender Hohlräume auf, in denen sich das Reagenz befindet und in denen gleichzeitig eine Verteilung und Durchmischung der verdünnten Probe in beziehungsweise mit den Reagenzien stattfindet. Radial nach außen hin hat der Fluidkanal einen Verbindungskanal 94, der sich in die Meßkammer 84 öffnet. Diese wird radial nach innen durch eine Barriere 96 begrenzt. Die Meßkammer 84 ist so dimensioniert, daß das Probe-Reagenzgemisch sie bei der Zentrifugation so weit füllt, daß die Küvettenfenster 30 sich vollständig im Flüssigkeitsbereich befinden.

Der Analysevorgang spielt sich nun im Prinzip so ab, daß die Probe, also Serum oder Plasma in der notwendigen Verdünnung, durch die Öffnung 28 in die Probenkammer 29 eingefüllt wird. Dann wird der Rotor auf Drehzahl gebracht, wobei die Probenflüssigkeit in die Vließpapiere 88, 90, 92 eindringt, dort die Reagenzien auflöst und mit diesen zusammen in die Meßkammer eindringt. Dort wird dann während des Zentrifugierens, prinzipiell ähnlich wie bei bekannten Zentrifugalanalysatoren, die optische Absorption bestimmt, um daraus die gewünschte Konzentration eines Bestandteils der Probe zu erhalten.

An das Material für die Einsatzelemente, insbesondere für die Analyseelemente, werden hohe Anforderungen gestellt. Es muß inert gegen die mit ihm in Kontakt kommenden physiologischen Flüssigkeiten und Reagenzien sein und sich präzise und doch möglichst kostengünstig in den notwendigen Formen verarbeiten lassen. Darüberhinaus müssen die Küvettenfenster 30 optisch in dem notwendigen Spektralbereich durchlässig sein. Dies ist besonders bei den niedrigen, für Analysezwecke verwendeten Wellenlängen (z. B. 340 nm), ein gewisses Problem. Obwohl in der dargestellten Ausführungsform die Küvettenfenster 30 als in ein Spritzgußteil eingesetzte Elemente dargestellt sind, kann es zweckmäßig sein, einen größeren Teil oder sogar die gesamte Ober- und Unterseite der Analyseelemente aus einem entsprechenden durchsichtigen Kunststoff herzustellen. Zwischen diesen durchsichtigen Kunststoffflächen befindet sich dann sandwichartig ein Mittelteil, das den Analysekanal mit Probenkammer 29 und Meßkammer 84 seitlich begrenzt. Auch das gesamte Einsatzelement kann selbstverständlich aus durchsichtigem Material bestehen. Geeignete optisch durchlässige Materialien sind z. B. Polymethylmethacrylat und Polystyrol.

Wie bereits im einleitenden Teil dargelegt, sind die Triggerbohrungen vorzugsweise in den Analyseelementen 16 bis 21 und nicht beispielsweise in der Rotorbasis vorgesehen, um eine präzise Zuordnung ihrer Position zu den Küvettenöffnungen 30 sicherzustellen. Ein weiterer Vorteil dieser Maßnahme besteht darin, daß ein Meßvorgang wirklich nur an solchen Rotorpositionen getriggert wird, an denen er auch notwendig ist. So hat beispielsweise das Probengewinnungs- und -vorbereitungselement 22 eine ununterbrochene Blendenfläche 35, das Einfach-Analyseelement 16 nur eine Triggermarke, wobei die gleichgroßen Dreifach-Analyseelemente 18 und Fünffach-Analyseelemente 17 drei bzw. fünf Marken haben. Wären die Triggermarken an der Rotorbasis vorgesehen und damit nicht mit den Einsatzelementen auswechselbar, würden die Meßvorgänge auch an solchen Positionen getriggert, an denen gar keine Messung erforderlich ist. Insbesondere bei Verwendung einer Blitzlampe für das Photometer des Zentrifugalanalysators ergibt sich eine erhebliche Energieersparnis und Erhöhung der Lebensdauer, wenn keine unnötigen Meßvorgänge und damit Blitze durch die Triggerung ausgelöst werden.

Aus Fig. 2 ist auch zu ersehen, daß in der eingangs geschilderten Art und Weise die Halterung der Einsatzelemente, hier also der Haltezapfen 42 sich in der Nähe der Küvette befindet. Eventuelle Maßabweichungen bei der Herstellung der Einsatzelemente oder durch thermische Ausdehnung wirken sich durch diese Maßnahme nur verhältnismäßig wenig auf den Abstand der Elementhalterung 42, 43 zu den Küvettenfenstern 30 aus.

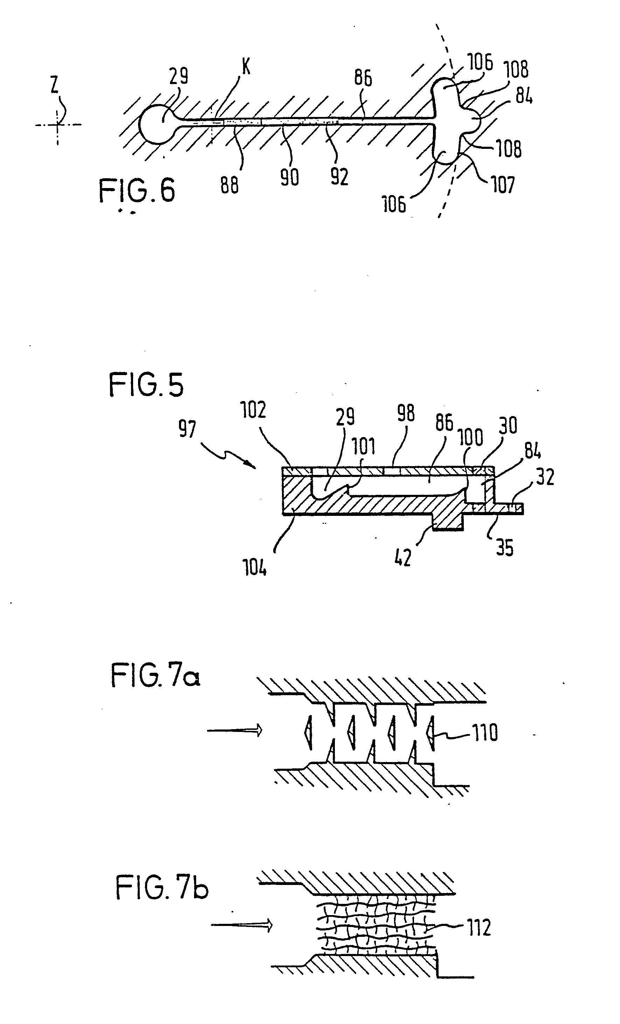

Wie bereits erwähnt, enthalten die Analyseelemente die Reagenzien bevorzugt in getrockneter und bereits herstellerseitig vorgepackter Form, weil dadurch eine besonders einfache Bedienung des Gerätes bei gleichzeitig höchster Flexibilität ermöglicht wird. Für besondere Reaktionen kann es aber auch zweckmäßig sein, flüssige Reagenzien zu verwenden. Diese werden bevorzugt erst im Gerät in den Analysekanal eingefüllt. Fig. 5 zeigt ein geeignetes Analyseelement 97 in einem radialen Querschnitt durch die Mitte seines Analysekanals. Man erkennt, daß der Fluidkanal 86 hier einen für die Aufnahme eines Reagenz geeigneten Hohlraum bildet, welcher durch die Barrieren 100 und 101 begrenzt wird. Im Deckelteil 102 des Flüssig-Analyseelementes 97 befindet sich eine Einfüllöffnung 98 für das Reagenz. Probenkammer 29, Fluidkanal 86, Meßkammer 84 und Haltezapfen 42 sind am Unterteil 104 des Flüssig-Analyseelementes 97 ausgeformt, welches mit dem Deckelteil 102 verschweißt ist.

Zum Betrieb des Flüssig-Analyseelementes wird ein entsprechendes Reagenz von Hand oder mit Hilfe eines in Fig. 1 nicht dargestellten, auf einem entsprechenden Kreisumfang des Zentrifugalanalysators angeordneten, Dosiergerätes durch die Öffnung 98 zugegeben. Der anschließende Analysegang läuft analog wie bei den bekannten Zentrifugalanalysatoren ab, wobei der Vorteil der erfindungsgemäßen Einrichtung darin besteht, daß mit verschiedenen Reagenzien gefüllte und eventuell verschieden gestaltete Flüssig-Analyseelemente 97 als Einsatzelemente in einer Rotoreinheit verwendet werden können.

Fig. 6 zeigt eine besondere Ausführungsform eines Analysekanals eines Analyseelementes 16, 17, 18, 19, 20 oder 21. Dargestellt ist ein Querschnitt etwa in der Mitte der Höhe der Vliespapiere mit den Reagenzien nach Fig. 2. Der Querschnitt verläuft parallel zur Rotorfläche. Man erkennt die Probenkammer 29 und den Fluidkanal 86, sowie die Vliespapiere 88, 90 und 92 mit den Reagenzien. Die Besonderheit der dargestellten Ausführungsform besteht darin, daß sich radial nach innen an die Meßkammer 84 zwei Vorkammern 106 anschließen, die einer ergänzenden Mischung der aus den Vliespapieren 88, 90 und 92 herausgelösten Reagenzien mit der Probenlösung dienen.

Um diese Zusatzmischwirkung zu erreichen, wird der Zentrifugalanalysator in einem Mischlauf unmittelbar vor dem Messen mehrfach beschleunigt und abgebremst, wobei das Reaktionsgemisch abwechselnd zumindest teilweise in die Vorkammern 106 eindringt und dann, wenn die Beschleunigung in Umfangsrichtung (Tangentialbeschleunigung) aufhört, wieder in die Meßkammer 84 zurückfließt. Durch diesen Vorgang wird eine sehr gute Durchmischung erreicht. Eine auf den gleichen Prinzipien basierende Mischeinrichtung kann auch eine andere als die hier dargestellte Gestaltung aufweisen, wobei lediglich wesentlich ist, daß die Vorkammern 106 radial einwärts von der Meßkammer 84 liegen und über entsprechende kleine Barrieren 108 mit dieser in Verbindung stehen, wobei die Barrieren eine solche Höhe haben, daß sie von der Flüssigkeit beim Beschleunigen oder Abbremsen des Rotors wenigstens teilweise überwunden werden können und andererseits das Zurückfließen der Flüssigkeit bei fehlender Tangentialbeschleunigung nicht behindern.

In einer bevorzugten Ausführungsform der Erfindung sind die Wände 107 der Vorkammern 106 mit einer Krümmung versehen, die im dargestellten Querschnitt einem Kreis um einen Punkt entspricht, der auf der Verbindungslinie zwischen der Meßkammer 84 und dem Zentrum des Analysenrotors zwischen diesen beiden Punkten liegt. Dieser Sachverhalt ist in der Figur durch gestrichelte Hilfslinien angedeutet, wobei der Krümmungsmittelpunkt mit dem Bezugszeichen K und das Rotorzentrum mit dem Bezugszeichen Z markiert sind.

Die Fig. 7a und 7b zeigen andere zur zusätzlichen Durchmischung des Reaktionsgemisches geeignete Einrichtungen. Es handelt sich um statische Mischeinrichtungen, die in den Analyseelementen im Fluidkanal vor der Meßkammer 84 angeordnet sein können. Die Darstellung ist ein Querschnitt in der Ebene wie in den Fig. 2 und 5. Die Flußrichtung des Reaktionsgemisches ist durch Pfeile angegeben. Die Mischwirkung wird bei der Fig. 7a durch Verdrängungskörper 110 erzielt, die den Strom der Flüssigkeit teilen und wieder zusammenführen, um dadurch eine Mischwirkung zu erreichen. Diese Verdrängungskörper können einstückig an die entsprechenden Bauteile des Analyseelementes angegossen sein. Eine andere Ausführungsform ist in Fig. 7b dargestellt. In diesem Fall dient eine in das Analyseelement eingebrachte und an entsprechender Stelle im Fluidkanal 86 befestigte Netzstruktur 112, um den Reagenzgemischstrom vielfältig aufzuteilen, wieder zusammenzuführen und damit zu durchmischen.

Im folgenden wird die Betriebsweise des erfindungsgemäßen Gerätes erläutert, wobei die bereits zuvor näher erläuterten Zwischenschritte hier nur noch kurz erwähnt werden.

Zur Programmierung des Gesamtgerätes wird bevorzugt eine Anforderungskarte verwendet, welche von dem untersuchenden Arzt ausgefüllt werden kann. Darin ist in maschinell lesbarer Form eine Codierung für die Probe enthalten, der der Name des Patienten zugeordnet ist. Diese Information wird als Probenidentifikation bezeichnet. Durch entsprechende maschinenlesbare Markierung wird das sogenannte Anforderungsprofil festgelegt, d. h. der Arzt legt fest, welche Bestandteile der Probe analytisch bestimmt werden sollen. Diese Information wird im folgenden als Analysenidentifikation bezeichnet.

Mit Hilfe des, wie vorstehend beschrieben, als Spritze verwendbaren Probenentnahme- und -aufbereitungselements wird dem Patienten eine Blutprobe entnommen. Die Probenidentifikation wird als Codierung 26 gleichzeitig auf dem Einsatzelement 22 angebracht. Dies kann z. B. durch Übertragen eines auf der Anforderungska.te befindlichen entsprechenden Klebeetiketts mit einer Balkencodierung auf die entsprechende Fläche des Probengewinnungs- und -vorbereitungselements 22 geschehen.

Im klinisch-chemischen Labor, in dem das erfindungsgemäße Gerät aufgestellt ist, werden die Anforderungskarten mehrerer Patienten nacheinander in eine entsprechende Leseeinrichtung des Gerätes eingegeben. Das Gerät erfährt auf diese Weise sowohl die Probenidentifikation als auch die Analysenidentifikation. Aus diesen Angaben bestimmt ein in das Gerät eingebauter Rechner die notwendige Beladung des Rotors mit den Einsatzelementen für die durchzuführenden Analysen. Entsprechende Anweisungen für die Rotorbeladung werden auf einem Bildschirmgerät oder per Drucker angezeigt. Die Beladung kann auch vollautomatisch erfolgen. Nach diesen Anweisungen wird die Beladung der Rotoren durchgeführt. Dies geschieht bei der zuvor dargestellten Ausführungsform des Gerätes dadurch, daß entsprechend den Anweisungen Probengewinnungs- und -aufbereitungselemente 22 und Analyseelemente 16 bis 21 auf die Rotorbasis 12 aufgesetzt werden. Nachdem die Rotorbasis 12 beladen ist, wird der Zentralverschluß 44 verschlossen. Die Beladung des Rotors geschieht in vollständig auf den Einzelfall abgestimmter Art und Weise. Wird beispielsweise nur eine Analyse benötigt, so wird zusätzlich zu dem Probengewinnungs- und -vorbereitungselement 22 lediglich ein Einfach-Analyseelement 16 aufgesetzt. Danach kann die nächste Probe aufgebracht werden. In anderen Fällen wird ein bestimmtes sich häufiger wiederholendes Profil angefordert, d. h. eine Reihe von für ein bestimmtes Krankheitsbild wesentlichen Analysen. Für derartige Zwecke können entsprechende Mehrfach-Analyseelemente 18, 20, 21 vorgesehen sein, die in ihren einzelnen Analysekanälen verschiedene Reagenzien enthalten und bei denen die Analysekanäle möglicherweise auch in der Form verschieden ausgebildet sind. Derartige Profilanalyseelemente ermöglichen eine besonders kostengünstige Bestimmung häufig wiederkehrender Profile. Wenn in anderen Fällen die gleiche Analyse von einer Mehrzahl von Proben erforderlich ist, können wiederum andere Mehrfach-Analyseelemente zum Einsatz kommen, die in mehreren Analysekanälen Reagenzien für die gleiche Bestimmung erhalten. In diesem Fall werden nacheinander die entsprechenden mit den Proben gefüllten Probengewinnungs- und -vorbereitungselemente nacheinander aufgesetzt und anschließend das entsprechende Mehrfach-Analyseelement. Schließlich können umfassende und spezielle Analyseprofile durch eine Kombination von Einfach- und Mehrfach-Analyseelementen erfüllt werden. Man erkennt, daß durch die erfindungsgemäße Einrichtung eine große Flexibilität möglich wird. Die Handhabung ist auch besonders einfach, weil insbesondere bei der Verwendung vorgepackter trockener Reagenzien keine komplizierten manuellen Schritte mehr erforderlich sind.

Wenn ein großer Probendurchsatz gefordert wird, kann es sinnvoll sein, wenn die Beladung der Rotoreinheit mit den Einsatzelementen außerhalb des Zentrifugalanalysators stattfindet. Für diesen Zweck ist es sinnvoll, Zwischenscheiben vorzusehen, die zwischen der Rotorbasis und den Einsatzelementen in das Gerät eingebaut werden und dazu dienen, außerhalb des Gerätes in entsprechender Weise mit den Einsatzelementen beladen zu werden. Die Einheit aus Zwischenscheibe und Einsatzelementen, die in diesem Fall den Rotorkopf bildet, wird dann in ihrer Gesamtheit in den Zentrifugalanalysator eingesetzt. Die Zwischenscheiben erlauben es, mehrere Rotorköpfe mit Einsatzelementen zu bestücken und damit für die Messung vorzubereiten, während der Zentrifugalanalysator beispielsweise gerade andere Analysen durchführt.

Nachdem der mit den Einsatzelementen bestückte Rotorkopf in das Gerät eingesetzt und mit der Rotorbasis verbunden ist, folgt der Probengewinnungslauf des Rotors, bei dem in den Probengewinnungs- und -vorbereitungselementen die Proben, d. h. Serum oder Plasma, in der oben beschriebenen Art und Weise durch Zentrifugieren gewonnen werden.

Danach folgt die Probenaufbereitung, zu der insbesondere die entsprechende Verdünnung der Probe gehört. Dabei tritt die erfindungsgemäße Schrittschaltfunktion des Rotorantriebs in Kraft. Der Rotor wird in eine Position gebracht, in der der Dilutor 34 genau über der Entnahmeöffnung 56 eines Probengewinnungs- und -vorbereitungselementes 22 steht. Der Dilutor 34 bewegt sich danach vertikal nach unten, durchstößt den Verschlußstopfen 62, entnimmt durch Ansaugen die Probe und fährt wieder nach oben, um nacheinander in der für Dilutoren bekannten Art und Weise verschieden verdünnte Proben in die Verdünnungskammern 72, 74 und 76 zu geben. Dabei wird durch den Schrittschaltantrieb der Rotor jeweils in die richtige Position unter dem Dilutor 34 gebracht. Die genaue Positionierung des Rotors wird durch die an der Rotorbasis vorgesehenen Codierungen 24 erleichtert, die von einem geräteseitig vorhandenen Lesegerät gelesen werden und auf diese Weise eine präzise Rotorsteuerung ermöglichen.

Die Vorverdünnung in den Verdünnungskammern 72, 74 und 76 (Fig. 3 und Fig. 4) hat den Vorteil, daß eine vergleichsweise große Probenmenge relativ genau verdünnt werden kann. Die in die Zufuhröffnungen 28 der Analyseelemente überführte Probenmenge ist dagegen sehr klein. Der Dispensor 36 ist dazu vorgesehen, eine für alle aus einer bestimmten Verdünnung einer bestimmten Probe durchzuführenden Analysen ausreichende Menge verdünnter Proben anzusaugen und in die entsprechenden Zufuhröffnungen der Probenkammern zu verteilen. Selbstverständlich können auch die Funktionen des Dilutors 34 und des Dispensors 36 von einer Einheit erfüllt werden, jedoch ist die Verwendung zweier getrennter Einheiten insofern vorteilhaft, als sich eine schnellere Beladung der Analyseelemente ergibt.

Während der Probenverdünnung und -verteilung bewegt sich der Rotor schrittweise entsprechend durch die Codierungen 24 unter Kontrolle der Zentraleinheit des Zentrifugalanalysators gesteuert hin und her. Die Dosierungseinheiten 34 und 36 müssen dadurch nur Vertikalbewegungen durchführen. Durch die daraus resultierende mechanische Einfachheit des diese Bewegung ermöglichenden Antriebs wird eine kostengünstige Bauweise und große Zuverlässigkeit des Gerätes erreicht.

Vor dem sich nun anschließenden Misch- und Meßlauf werden noch die eventuell vorhandenen Flüssig-Analyseelemente 97 mit Reagenzien beschickt.

Nach vollständiger Probenverdünnung und -verteilung folgt der Misch- und Meßlauf, bei dem der Zentrifugalanalysator auf die zum Mischen und anschließenden Messen notwendigen Drehzahlen gebracht wird. Während dieses Laufes werden von dem Gerät die Codierungen 26 an den Einsatzelementen 16, 18, 20, 21 und 22 gelesen und mit der gespeicherten Probenidentifikation und Analysenidentifikation verglichen. Sollte sich eine Abweichung herausstellen, wird sofort Fehleranzeige gegeben. Dadurch wird jede Fehlanalyse durch falsches Beladen der Rotoren mit den Einsatzelementen mit Sicherheit ausgeschlossen. Diese Kontrolle kann selbstverständlich auch bereits nach dem Beladen vor oder während des Probengewinnungslaufes erfolgen.

Für die verschiedenen Rotorläufe sind im allgemeinen verschiedene Drehzahlen notwendig. Selbstverständlich hängen die notwendigen Drehzahlen von dem zur Anwendung kommenden Rotordurchmesser ab. Die höchsten Drehzahlen werden im Normalfall für die Zentrifugation zur Gewinnung der Serum- bzw. Plasmaproben benötigt. Sie liegen in der Größenordnung von mehreren tausend Umdrehungen pro Minute bei einem wirksamen Rotordurchmesser von ca. 25 cm.

Die Drehzahlen während des Misch- und Meßlaufes des erfindungsgemäßen Gerätes müssen auf die jeweils zur Anwendung kommenden Analyseeinsatzelemente abgestimmt sein. Bei Verwendung von Flüssig-Analyseelementen können die von konventionellen Zentrifugalanalysatoren dem Fachmann bekannten Erfahrungen benutzt werden.

Bei einem experimentellen Beispiel kommt ein vergleichsweise kleiner Rotor mit 33 mm Durchmesser zur Anwendung, bei dem der Meßkreisdurchmesser 28 mm beträgt. Der Analysekanal ist gemäß dem in Fig. 6 dargestellten Ausführungsbeispiel gestaltet, wobei der Fluidkanal 86 eine Breite von 1 mm und eine Höhe von 6 mm hat. In dem Fluidkanal 86 befinden sich mit getrockneten Reagenzien beschickte Vliespapiere. Deren radialer Abstand vom Rotorzentrum beträgt ungefähr 4 bis 10 mm.

Der Meßlauf besteht bei den beschriebenen Abmessungen beispielsweise für die Bestimmung von Glucose aus folgenden Schritten :

1. Zentrifugation bei 2 880 Umdrehungen pro Minute für 1 bis 25 Sekunden. Dabei dringt die verdünnte Probe in die ersten Vliespapiere ein und löst das Reagenz auf.

2. Zentrifugation bei 12 000 Umdrehungen pro Minute für 5 Sekunden. Hierdurch wird die Lösung aus dem Vlies in die Küvette getrieben. Auf dem Vlies bleibt nur eine minimale Menge Lösung zurück.

3. Eine Sekunde Beschleunigung auf 12 000 Umdrehungen pro Minute und Anhalten des Rotors während einer weiteren Sekunde. Dieser Vorgang wird 6 bis 20 mal wiederholt, wobei durch die Tangentialbeschleunigung die Lösung in die Vorkammern 106 getrieben und dadurch ein Mischeffekt erzielt wird.

4. Vier Sekunden Zentrifugation bei 12 000 Umdrehungen pro Minute um Verunreinigungen zu sedimentieren und Luftbläschen auszutreiben.

5. Messung bei 2 880 Umdrehungen pro Minute.

Wenn Rotoren eines anderen Durchmessers zur Anwendung kommen bzw. die Einsatzelemente mit den Analysereagenzien einen anderen radialen Abstand vom Zentrum des Rotors haben, sind entsprechende Drehzahlen zu verwenden, die zu den gleichen Werten der Zentrifugalbeschleunigung führen. Je nach den verwendeten Dimensionen und analytischen Verfahren wird aber von Fall zu Fall auch eine empirische Bestimmung der bestgeeigneten Drehzahlen notwendig sein.

Da alle Einsatzelemente, die bei einem bestimmten Rotorlauf mit dem Rotor verbunden sind, dem gleichen Drehzahlprogramm unterliegen, müssen die gleichzeitig zur Anwendung kommenden analytischen Bestimmungen so aufeinander abgestimmt sein, daß sie mit dem gleichen Drehzahlprogramm durchgeführt werden können. Dabei kann man sich, wie oben erwähnt, auch zu Nutze machen, daß die Zentrifugalbeschleunigung vom Zentrum zur Peripherie des Rotors zunimmt. Die radiale Anordnung beispielsweise der Vliespapiere oder anderen Reagenzienträger innerhalb des Einsatzelementes und/oder die radiale Positionierung des Einsatzelementes selbst sind also beispielsweise bestimmend für die Zentrifugalkräfte, denen die verdünnte Probenflüssigkeit bzw. die Reagenzlösung in einem solchen Reagenzienträger unterliegt.

Durch Anpassung der verschiedenen analytischen Bestimmungen auf die gegebenen Bedingungen ist es möglich, Einsatzelemente für eine Reihe analytischer Bestimmungen zu schaffen, die mit dem gleichen Misch- und Meßlauf des Zentrifugalanalysators gemessen werden können.

**Patentansprüche**

1. Zentrifugalanalysator mit einer Rotoreinheit zur analytischen Bestimmung von Bestandteilen von Proben, umfassend eine mit einem Antrieb verbundene Rotorbasis (12) und einen im Betrieb mit der Rotorbasis (12) verbundenen Rotorkopf (14) mit Probenkammern (29) für die Aufnahme einer Probenflüssigkeit und radial auswärts von den jeweils zugeordneten Probenkammern (29) angeordneten Meßkammern (84), mittels denen ein für den Nachweis der zu bestimmenden Bestandteile der Probe charakteristischer Parameter während der Rotation der Rotoreinheit gemessen werden kann, dadurch gekennzeichnet, daß der Rotorkopf (14) eine Mehrzahl verschiedener Einsatzelemente (16 bis 22) einschließt, von denen mindestens ein Teil Analyseelemente (16 bis 21) zur Bestimmung von jeweils einem oder mehreren Bestandteilen der Probe sind, die jeweils mindestens eine Probenkammer (29), eine Meßkammer (84) und einen Fluidkanal (86) aufweisen, der die Probenkammer (29) und die Meßkammer (84) verbindet, wobei in dem Fluidkanal radial zwischen der Probenkamer (29) und der Meßkammer (84) ein Analysereagenz derart angeordnet ist, daß die Probenflüssigkeit unter der Einwirkung der Zentrifugalkraft mit ihm zusammengebracht und mindestens zum erheblichen Teil vermischt wird, bevor sie in die Meßkammer (84) gelangt, und daß die Einsatzelemente auswechselbar, wahlweise und im Betrieb positionsstabil an verschiedenen Stellen an der Rotorbasis (12) angebracht werden können.

2. Zentrifugalanalysator nach Anspruch 1, dadurch gekennzeichnet, daß die Fluidkanäle (86) eine dem jeweiligen Analysezweck angepaßte Gestaltung aufweisen.

3. Zentrifugalanalysator nach Anspruch 1 oder 2, dadurch gekennzeichnet, daß die Einsatzelemente Mehrfach-Analyseelemente (17 bis 21) zur analytischen Bestimmung einer oder mehrerer Bestandteile einer oder mehrerer Proben einschließen.

4. Zentrifugalanalysator nach einem der Ansprüche 1-3, dadurch gekennzeichnet, daß die Einsatzelemente (16 bis 22) Elemente (22) zur Gewinnung und/oder Vorbereitung der Probe einschließen.

5. Zentrifugalanalysator nach einem der Ansprüche 1-4, dadurch gekennzeichnet, daß die Einsatzelemente (16 bis 22) in ihren räumlichen Abmessungen sich so ergänzen, daß größere Elemente (19, 20, 21) am Platz einer ganzzahligen Mehrzahl der kleinsten Elemente (16, 17, 18, 22) mit der Rotorbasis verbindbar sind.

6. Zentrifugalanalysator nach einem der Ansprüche 1-5, dadurch gekennzeichnet, daß die jeweils auf dem gleichen Kreisumfang (H) zur Verbindung der Einsatzelemente (16 bis 22) mit der Rotorbasis (12) angeordneten Halterungen (42, 43) auf diesem Kreisumfang (H) des Rotors periodisch angeordnet sind und der Platzbedarf der verschiedenen Einsatzelemente (16 bis 22) ein ganzzahliges Vielfaches eines ganzzahligen Bruchteiles (B, G) der Kreisfläche des Rotors ist, wobei die Periodizitätslänge (a) der Halterungsanordnung dem ganzzahligen Bruchteil (B, G) entspricht.

7. Zentrifugalanalysator nach einem der Ansprüche 1-6, dadurch gekennzeichnet, daß der Rotorkopf (14) eine Zwischenscheibe mit Aufnahmen für Einsatzelemente (16 bis 22) und Halterungselementen zur Verbindung mit der Rotorbasis (12) einschließt.

8. Zentrifugalanalysator nach einem der Ansprüche 1-7, dadurch gekennzeichnet, daß die Rotorbasis (12) maschienenlesbare Codierungen (24) zur reproduzierbar genauen Einstellung bestimmter Rotorpositionen aufweist.

9. Zentrifugalanalysator nach einem der Ansprüche 1-8, dadurch gekennzeichnet, daß die Einsatzelemente (16 bis 22) in Aufsicht auf den Rotor gesehen im wesentlichen kreissektorförmig ausgebildet sind.

10. Zentrifugalanalysator nach Anspruch 3, dadurch gekennzeichnet, daß die Probengewinnungs- bzw. Probenvorbereitungselemente (22) Entnahmestellen (56) auf dem gleichen Kreisumfang (P) aufweisen, auf dem die Zufuhröffnungen (28) der Probenkammern (29) der Analyseelemente (16 bis 21) liegen.

11. Zentrifugalanalysator nach einem der Ansprüche 1-10, dadurch gekennzeichnet, daß die Einsatzelemente (16 bis 22) Codierungen (26) bezüglich der Probe und/oder zu bestimmenden Bestandteile der Probe tragen.

12. Zentrifugalanalysator nach einem der Ansprüche 1-11, dadurch gekennzeichnet, daß die Einsatzelemente Marken (32) zur Triggerung des Meßvorganges aufweisen.

13. Zentrifugalanalysator nach einem der Ansprüche 1-12, dadurch gekennzeichnet, daß zur Positionierung der Einsatzelemente formschlüssig zusammenwirkende Halterungsteile (42, 43) an der Rotorbasis (12) und an den Einsatzelementen (16 bis 22) in der Nachbarschaft der Meßkammern (84) vorhanden sind.

14. Zentrifugalanalysator nach einem der Ansprüche 1 bis 13, dadurch gekennzeichnet, daß er Auswerteeinrichtungen zur Auswertung von Meßergebnissen enthält, die der analytischen Bestimmung von mehr als einem Bestandteil einer oder mehrerer Proben in einem Rotorlauf entsprechen, wobei die Auswerteeinrichtung insbesondere ein Photometer einschließt, das eine Messung bei einer Mehrzahl verschiedener Wellenlängen ermöglicht, wobei der Wechsel der Wellenlängen mit dem Durchlauf der Meßküvetten (84) des Rotors so koordiniert ist, daß die Absorption der Küvetten (84) bei jeder gewünschten Wellenlänge meßbar ist.

15. Zentrifugalanalysator nach Anspruch 14, dadurch gekennzeichnet, daß er einen Rotorantrieb aufweist, durch den der Rotor schrittweise in bestimmte Positionen bewegbar ist.

## Claims

1. Centrifugal analyser with a rotary unit for the analytical determination of components of samples, comprising a rotor base (12) connected with a drive and a rotor head (14), connected in operation with the rotor base (12), with sample chambers (29) for the reception of a sample liquid and measurement chambers (84), arranged radially outwardly from the associated sample chambers (29), by means of which, during the rotation of the rotor unit, there can be measured a parameter characteristic for the determination of the components of the sample to be determined, characterised in that the rotor head (14) includes a plurality of different insert elements (16 to 22), of which at least a part are analysis elements (16 to 21) for the determination of, in each case, one or more components of the sample, which, in each case, have at least one sample chamber (29), a measurement chamber (84) and a liquid canal (86) which connects the sample chamber (29) and the measurement chamber (84), whereby, in the liquid canal, there is radially arranged, between the sample chamber (29) and the measurement chamber (84), an analysis reagent in such a manner that the sample liquid is brought together with it under the action of centrifugal force and is mixed at least to a substantial part before it reaches the measurement chamber (84) and that the insert elements can be applied exchangeably, selectively and, in operation, position-stably at different positions on the rotor base (12).

2. Centrifugal analyser according to claim 1, characterised in that the liquid canals (86) have a shape adapted to the particular analysis purpose.

3. Centrifugal analyser according to claim 1 or 2, characterised in that the insert elements include multiple analysis elements (17 to 21) for the analytical determination of one or more components of one or more samples.

4. Centrifugal analyser according to one of claims 1-3, characterised in that the insert elements (16 to 22) include elements (22) for the obtaining and/or preparation of the sample.

5. Centrifugal analyser according to one of claims 1-4, characterised in that the insert elements (16 to 22) are, in their spatial dimensions, to be so supplemented that larger elements (19, 20, 21) are connectable with the rotor base in the place of a whole numbered plurality of the smallest elements (16, 17, 18, 22).

6. Centrifugal analyser according to one of claims 1-5, characterised in that the holding means (42, 43) each arranged on the same circumference (H) for the connection of the insert elements (16 to 22) with the rotor base (12) are arranged periodically on this circumference (H) of the rotor and the spatial requirement of the different insert elements (16 to 22) is a whole-numbered multiple of a whole-numbered fraction (B, G) of the circular surface of the rotor, whereby the periodicity length (a) of the holding means arrangement corresponds to the whole-numbered fraction (B, G).

7. Centrifugal analyser according to one of claims 1-6, characterised in that the rotor head (14) includes an intermediate disc with mountings for insert elements (16 to 22) and holding elements for the connection with the rotor base (12).

8. Centrifugal analyser according to one of claims 1-7, characterised in that the rotor base (12) has mechanically readable codings (24) for the reproducible, exact adjustment of definite rotor positions.

9. Centrifugal analyser according to one of claims 1-8, characterised in that the insert elements (16 to 22) are formed, seen in plan view on the rotor, substantially circular sector shaped.

10. Centrifugal analyser according to claim 3, characterised in that the sample obtaining or sample preparing elements (22) have take-off points (56) on the same circumference (P) on which lie the feed-in openings (28) of the sample chambers (29) of the analysis elements (16 to 21).

11. Centrifugal analyser according to one of claims 1-10, characterised in that the insert elements (16 to 22) carry codings (26) with regard to the sample and/or the components of the sample to be determined.

12. Centrifugal analyser according to one of claims 1-11, characterised in that the insert elements have marks (32) for the triggering of the measurement procedure.

13. Centrifugal analyser according to one of claims 1-12, characterised in that for the positioning of the insert elements there are present form-locking, cooperating holding parts (42, 43) on the rotor base (12) and on the insert elements (16 to 22) in the vicinity of the measurement chambers (84).

14. Centrifugal analyser according to one of claims 1-13, characterised in that it contains evaluation devices for the evaluation of measurement results which correspond to the analytical determination of more than one component of one or more samples in a rotor run, whereby the evaluation device includes, in particular, a photometer which makes possible a measurement at a plurality of different wavelengths, whereby the change of the wavelengths is so coordinated with the runthrough of the measurement cuvettes (84) of the rotor that the absorption of the cuvettes (84) is measurable at any desired wavelength.

15. Centrifugal analyser according to claim 14, characterised in that it has a rotor drive by means of which the rotor is movable stepwise into definite positions.

## Revendications

1. Analyseur centrifuge équipé d'un ensemble rotatif pour la détermination analytique de composants dans des échantillons, comportant une base de rotor (12) connectée à un moyen d'entraînement et une tête de rotor (14) connectée pendant le fonctionnement à la base de rotor (12) et munie de chambres de mesure (84) disposées plus à l'extérieur que les chambres d'échantillonnage (29) associées, au moyen desquelles un paramètre caractéristique pour la mise en évidence des composants à déterminer peut être mesuré pendant la rotation de l'ensemble rotatif, caractérisé en ce que la tête de rotor (14) comprend une pluralité de segments amovibles (16 à 22), dont au moins une partie est constituée par des éléments d'analyse (16 à 21) pour la détermination chaque fois d'un ou de plusieurs composants de l'échantillon, qui comportent chacun au moins une chambre d'échantillonnage (29), une chambre de mesure (84) et un canal (86) pour fluides qui relie la chambre d'échantillonnage (29) à la chambre de mesure (84), un réactif analytique étant disposé dans le canal pour fluides sur le rayon entre la chambre d'échantillonnage (29) et la chambre de mesure (84) de telle façon que le liquide à examiner vienne sous l'influence de la force centrifuge en contact avec le réactif analytique et se mélange au moins pour une partie considérable avec ce dernier, avant de pénétrer dans la chambre de mesure (84) et en ce que les éléments amovibles peuvent être montés au choix et en position stable pendant le fonctionnement à des endroits différents sur la base de rotor (12).

2. Analyseur centrifuge selon la revendication 1, caractérisé en ce que les canaux (86) pour fluides revêtant une forme adaptée aux fins analytiques du cas.

3. Analyseur centrifuge selon la revendication 1 ou 2, caractérisé en ce que les éléments amovibles comportent des éléments d'analyse multiples (17 à 21) pour la détermination analytique d'un ou de plusieurs composants d'un ou de plusieurs échantillons.

4. Analyseur centrifuge selon l'une des revendications 1 à 3, caractérisé en ce que les éléments amovibles (16 à 22) comportent des éléments (22) pour l'obtention et/ou la préparation de l'échantillon.

5. Analyseur centrifuge selon l'une des revendications 1 à 4, caractérisé en ce que les éléments amovibles (16 à 22) se complètent quant à leurs dimensions dans l'espace de telle façon que les éléments plus grands (19, 20, 21) puissent être connectés à la base de rotor à la place d'un nombre entier d'éléments plus petits (16, 17, 18, 22).

6. Analyseur centrifuge selon l'une des revendications 1 à 5, caractérisé en ce que les éléments de fixation (42, 43) disposés chaque fois sur une même circonférence (H) pour connecter chacun des segments amovibles (16 à 22) à la base de rotor, sont disposés à des intervalles réguliers sur cette circonférence (H) du rotor et en ce que la place nécessaire pour les différents éléments amovibles (16 à 22) est un multiple entier d'une fraction exprimée par des nombres entiers (B, G) de l'aire de cercle du rotor, l'intervalle régulier (a) entre les emplacements des éléments de fixation correspondant à la fraction exprimée par des nombres entiers (B, G).

7. Analyseur centrifuge selon l'une des revendications 1 à 6, caractérisé en ce que la tête de rotor (14) comporte un disque intermédiaire pourvu d'emplacements pour les éléments amovibles (16 à 22) et d'éléments de fixation pour leur fixation sur la base de rotor (12).

8. Analyseur centrifuge selon l'une des revendications 1 à 7, caractérisé en ce que la base de rotor (12) comporte des signes codés (24) pouvant être élus par une machine pour obtenir un réglage précis reproductible de certaines positions du rotor.

9. Analyseur centrifuge selon l'une des revendications 1 à 8, caractérisé en ce que selon une vue plongeante du rotor, des éléments amovibles (16 à 22) ont essentiellement la forme d'un segment de cercle.

10. Analyseur centrifuge selon la revendication 3, caractérisé en ce que les éléments (22) pour l'obtention ou la préparation d'un échantillon possèdent des emplacements de prélèvement (56) sur la même circonférence (P) sur laquelle sont situés les orifices d'entrée (28) des chambres d'échantillonnage (29) des éléments d'analyse (16 à 21).

11. Analyseur centrifuge selon l'une des revendications 1 à 10, caractérisé en ce que les éléments amovibles (16 à 22) comportent des signes codés (26) se référant à l'échantillon et/ou aux composants à déterminer de l'échantillon.

12. Analyseur centrifuge selon l'une des revendications 1 à 11, caractérisé en ce que les éléments amovibles comportent des marques (32) pour le déclenchement du processus de mesure.

13. Analyseur centrifuge selon l'une des revendications 1 à 12, caractérisé en ce qu'il est prévu pour le positionnement des éléments amovibles des éléments de fixation (42, 43) coopérant par commande mécanique, sur la base de rotor (12) et sur les éléments amovibles (16 à 22) à proximité des chambres de mesure (84).

14. Analyseur centrifuge selon l'une des revendications 1 à 13, caractérisé en ce qu'il comporte des dispositifs d'évaluation pour évaluer les résultats des mesures correspondant à la détermination analytique de plus d'un composant d'un ou de plusieurs échantillons au cours d'une révolution du rotor, le dispositif d'évaluation comprenant en particulier un photomètre permettant une mesure à une pluralité de longueurs d'onde différentes, la variation des longueurs d'onde étant coordonnée avec le passage des cuvettes de mesure (84) du rotor de telle façon que l'absorption des cuvettes (84) puisse être mesurée à chaque longueur d'onde souhaitée.

15. Analyseur centrifuge selon la revendication 14, caractérisé en ce qu'il comporte un entraînement du rotor au moyen duquel le rotor peut être mû pas à pas dans des positions différentes.

FIG. 1

# FIG. 2

FIG. 3

FIG.4

FIG.6

FIG.5

FIG.7a

FIG.7b